# EUROPEAN PATENT SPECIFICATION

(11) **EP 3 486 338 B1**
(45) Date of publication and mention of the grant of the patent: **21.06.2023**
(21) Application number: 16908436.5
(22) Date of filing: 13.07.2016
(51) Int. Cl.: B22F 9/20, C22B 34/24, C22C 1/04, H01G 9/052, H01G 9/15, B22F 1/00, B22F 1/068, B22F 1/142, B22F 1/145, B22F 9/04

(54) **FLAKY TANTALUM POWDER AND METHOD FOR PREPARING THE SAME**
PLÄTTCHENFÖRMIGES TANTALPULVER UND VERFAHREN ZU DESSEN HERSTELLEUNG
POUDRE DE TANTALE FLOCONNEUSE ET SON PROCÉDÉ DE PRÉPARATION

(43) Date of publication of application: 22.05.2019
(73) Proprietor: Ningxia Orient Tantalum Industry Co., Ltd., Shizuishan, Ningxia 753000 (CN)
(72) Inventor: CHEN, Xueqing, Shizuishan Ningxia 753000 (CN); CHENG, Yuewei, Shizuishan Ningxia 753000 (CN); MA, Yuezhong, Shizuishan Ningxia 753000 (CN); LI, Zhongxiang, Shizuishan Ningxia 753000 (CN); WANG, Zhidao, Shizuishan Ningxia 753000 (CN); LI, Xia, Shizuishan Ningxia 753000 (CN); SHI, Dejun, Shizuishan Ningxia 753000 (CN); ZHAO, Zhonghuan, Shizuishan Ningxia 753000 (CN)
(74) Representative: Millburn, Julie Elizabeth
(86) International application number: PCT/CN2016/089874
(87) International publication number: WO 2018/010108

(56) References cited:
- EP-A2- 0 665 302
- EP-B1- 1 144 147
- CN-A- 1 236 177
- CN-A- 1 433 485
- CN-A- 1 872 461
- CN-A- 101 234 425
- JP-A- 2002 030 301
- JP-A- 2002 030 301
- US-A- 5 448 447
- US-A1- 2009 180 240

## Description

### Technical Field

The invention relates to a metal powder and a preparation method thereof, and more specifically relates to a tantalum powder and a preparation method thereof, in particular relates to capacitor-grade medium-high-voltage tantalum powder and a preparation method thereof.

### Background Technology

The metal tantalum, being a valve metal, can generate a dense oxidation film on the surface and has unidirectional conductivity. Anode film made of metal tantalum has stable chemical properties (especially stable in acidic electrolyte), a high resistivity (7.5×10¹⁰Ω•cm), a high dielectric constant (27.6), and a small leakage current. In addition, the anode film also has advantages of a broad working temperature range (-80°C to 200°C), a high reliability, a shock resistance, a long service life and the like. Thus it is an ideal material for manufacturing the tantalum capacitor with a small size and a high reliability. Since the tantalum capacitor has many advantages, it is widely used in aviation, space flight, communication, electronic equipments such as computer, mobile phone and the like.

In terms of material classification, tantalum powder specially used for manufacturing capacitor is called capacitor-grade tantalum powder. The tantalum powder can be divided into high-voltage tantalum powder (the working voltage is larger than 40V), medium-voltage tantalum powder (the working voltage is between 20 and 40V, including end point) and low-voltage tantalum powder (the working voltage is less than 20V) according to different use voltages. In recent years, with the rapid development of the electronic technology, there is a higher requirement for the high-frequency characteristic of medium-voltage and high-voltage tantalum powder.

According to the prior art, for a sintered compact made of tantalum powder, the oxygen content in tantalum needs to be strictly limited, and a too high oxygen content can cause an oxide deposition phase on the surface of the tantalum sintered compact, these deposition phases are deposited on the amorphous tantalum pentoxide film formed during the anodizing process, so that the amorphous tantalum pentoxide film can be locally crystallized and even broken, and thereby the reliability of the amorphous tantalum pentoxide film is reduced, the leakage current is large, and the performance of the capacitor is reduced. Doping nitrogen in the tantalum powder can effectively reduce the oxygen content of the tantalum powder, while it can reduce the sintering shrinkage rate and increase the porosity, and can facilitate the immersion of the cathode material and increase the capacity of the capacitor. Therefore, doping nitrogen in the tantalum powder and doping nitrogen in the sintered anode have been an important technology to improve the performance of the tantalum powder and the tantalum capacitor in the tantalum powder production field.

US 5448447 (also published as CN1143333C) discloses a method that the leakage current is reduced by at least 28% during high-voltage formation of 100V or more by doping nitrogen of 500-7000ppm into low-CV tantalum powder of 30000 µFV/g or less. The nitrogen doping method of the tantalum powder is characterized in that nitrogen doping is carried out in the deoxidation process of the final step of the manufacturing procedure, and then no high-temperature heat treatment is carried out again.

JP Kokai No.: 2002-30301A discloses a tantalum powder containing nitrogen of 500-30000ppm, and in which the deviation of the nitrogen content among respective particles is 100% or less, the tantalum powder has a better breakdown voltage compared with the tantalum powder without nitrogen doped. The nitrogen doping method of the tantalum powder is a method wherein the nitrogen doping is carried out in a reaction container such as a rotary kiln in a rotating state in the deoxidation process of final step of the manufacturing procedure, with heating to 850°C, and then no heat treatment at 900°C or higher is carried out as well. What the patent/application investigates is a nitrogen doping method and a nitrogen-containing tantalum powder which are suitable for high-capacity tantalum powder of 30000µFV/g or higher.

CN1363102A and CN100528418C respectively disclose a nitrogen doping method for tantalum and niobium metal powder, wherein the content of nitrogen doped is between 100 to 6000ppm. The nitrogen doping method described in the two patents is also carried out in the final step, wherein the nitrogen doping temperature is 100-600°C; and then no heat treatment is carried out as well.

CN1433485A and CN1872461A describe a reparation method of the nitrogen-containing tantalum powder, wherein nitrogen is introduced in the process of reducing the metal compound with the reducing agent, so that nitrogen is contained in the metal. Because of the reduction reaction process and the nitrogen doping at 800°C or higher, the reaction between tantalum and nitrogen in the nitrogen doping process is too fast, so that the concentration of nitrogen in each part in the reaction container is not consistent, and therefore it is difficult to ensure that the nitrogen doping of the particles is uniform.

EP 0 665 302 A2 discloses a process of producing stabilized ultra fine powder and the resultant powder product and products of further processing (anode capacitors). The process comprises: (a) producing primary powder particles by sodium reduction under conditions controlled to yield 0.3 to 4 micron size product, typically with oxygen levels of 1,500 to 8,000 ppm and, optionally, agglomerating the powders through well-known-to-the-art methods, (b) deoxidizing the powders through placement in a vacuum furnace with an alkaline earth reducing agent and heating to 700 to 1,100°C to reduce the dissolved and surface oxygen of the powder, and (c) cooling the powder to room temperature, nitriding and then passivating.

US 2009/180240 A1 discloses a process for preparing valve metal particles uniformly containing nitrogen, wherein the difference ratio of the nitrogen contents among the particles is 20% or less, wherein the raw material particles of the valve metal are heated at a temperature of 200° C. or less in an atmosphere of nitrogen containing gas for 2 hours or more. US 2009/180240 A1 discloses that the raw material, that is tantalum or niobium powder, was spherically granulated, heat treated at 850° C.-1700° C. in vacuum, and subsequently cooled to 200° C. or less, and then being nitrogen-doped; alternatively, the heat treated tantalum powder or niobium powder was mixed with magnesium powder and heated at a temperature of 700° C.-1000°C. to deoxidizing, then cooled to 200°C. or less and Subsequently being nitrogen-doped, and the product was washed with mineral acid to remove magnesium oxide and residual metal magnesium.

EP 1 144 147 B1 discloses a process for production of metal powders from the class consisting of Ta and/or Nb and all up thereof alone or with one or more of metals selected from the class of Ti, Mo, W, Hf and V and Zr comprising the steps of: (a) providing an oxide or mixed oxides of the metal(s), the oxide being in a form that is traversible by gas, (b) passing a hydrogen containing gas through the mass at an elevated temperature, (c) the porosity of the oxide, temperature and time of reduction reaction being selected to remove at least 20 % of the oxygen contained in the oxide to produce a suboxide, (d) further reducing the suboxide in a second stage with reducing agents selected from the class of reducing metals and hydrides of reducing metals, thereby substantially completely reducing the oxide to free the metal portion thereof.

The above existing nitrogen doping technology discloses the nitrogen doping method of a same kind, namely nitrogen doping is carried out in the final step, and then no high-temperature heat treatment is carried out.

By investigating, the inventor finds that when the existing method is used for nitrogen doping of tantalum powder with high capacity of 30000µFV/g or higher, the leakage current and the capacity of the tantalum powder could be improved. On the other hand, for the tantalum powder of 30000µFV/g or lower, in particular the flaked medium-high-voltage tantalum powder, when nitrogen doping is carried our in the final step, and no high-temperature heat treatment is carried out, the presence of the nitrogen element has no significant effect to the improvement of the leakage current of the medium-high-voltage tantalum powder of 30000µFV/g or lower, in particular the flaked tantalum powder, or in other words, no significant effect to the increment of the capacity of the tantalum powder.

Thus, in order to improve the presence formation of nitrogen elements and to make the distribution of nitrogen elements more uniform, so as to make the doped nitrogen element play a better role, a novel nitrogen doping method and the flaked tantalum powder containing nitrogen of 300-1800ppm are developed in the invention, thereby the leakage current and the voltage resistance, especially high-frequency characteristics of the medium-high-voltage flaked tantalum powder of 30000µFV/g or lower are further improved, so that the medium-high-voltage flaked tantalum powder can be better used in the field which has a higher requirement for the high-frequency characteristic.

### Summary of the Invention

In view of the above technical problems, one aim of the invention is to provide a flaked tantalum powder, especially medium-high-voltage flaked tantalum powder. The flaked tantalum powder contains nitrogen, phosphorus and boron, and is preferably suitable for high-frequency capacitors. Another aim of the invention is to provide a method for preparing the medium-high-voltage flaked tantalum powder.

Although the method disclosed by the present invention is especially suitable for medium-high-voltage flaked tantalum powder of 30000µFV/g or lower, but is also suitable for medium-high-voltage flaked tantalum powder of more than 30000µFV/g.

According to the technical solution described below, the present invention realizes one or more of the above aims.

A flaked tantalum powder preferably suitable for high-frequency capacitors, it is characterized in that the powder contains nitrogen of 300-1800ppm, preferably 400-1600ppm, more preferably 500-1500ppm, and most preferably 700-1300ppm; and phosphorus of 10-100ppm, preferably 20-80ppm, more preferably 30-70ppm; and boron of 1 to 80ppm, preferably 10 to 65ppm, more preferably 20 to 50ppm.

A flaked tantalum powder preferably suitable for high-frequency capacitors, it is characterized in that the electrolytic capacitor anode made from the powder has a capacity of about 3000-30000µFV/g under the condition of an energizing voltage of 100-250V and a testing frequency of 5000-30000 Hz.

Through a large amount of research, the inventors have surprisingly found that if the nitrogen content is too low, it cannot inhibit sintering, and cannot increase the capacity; if the nitrogen content is too high, the hardness of the tantalum powder is increased, so that the performance of the compact can be reduced, and even large abrasion to the grinding tool can be caused which may shorten the service life of the grinding tool, thus the nitrogen content of 300-1800ppm is more suitable.

The oxygen content of the flaked tantalum powder is preferably 800-3000ppm, and the Scott bulk density is not particularly limited, preferably 1.4-2.0g/cm³, preferably 1.55-1.9g/cm³.

According to the invention there is provided a method for preparing flaked tantalum powder comprising the steps of:
1) subjecting the flaked tantalum powder to first heat treatment;
2) subjecting the first heat treated tantalum powder to first deoxidation;
3) subjecting the first deoxidized tantalum powder to low temperature nitridation at a temperature of 500°C or lower;
4) subjecting the low-temperature nitrided tantalum powder to second heat treatment at a temperature of 1000°C or higher; and
5) subjecting the second heat-treated tantalum powder to second deoxidation, and then optionally to pickling, water washing, drying, and sieving to obtain the flaked tantalum powder,
wherein the flaked tantalum powder of step 1) is obtained by subjecting tantalum powder obtained by reduction of potassium fluotantalate with sodium to ball milling, and pickling and impurity removal.

According to the invention there is also provided a flaked tantalum powder prepared by the method according to the invention preferably suitable for use in a high frequency capacitor, wherein the flaked tantalum powder comprises nitrogen of 300 to 1800ppm, preferably nitrogen of 400 to 1600ppm, more preferably 500 to 1500ppm, most preferably 700 to 1300ppm; and phosphorus of 10 to 100ppm; and boron of 1 to 80ppm.

In a preferred embodiment, the low temperature nitridation of step 3) is started in the cooling process of the deoxidation treatment of step 2) (particularly when temperature is lowered to 500°C or lower, for example, 500-240°C). The embodiment has the advantage that the tantalum powder does not need to be re-heated for low-temperature nitridation treatment, and more energy is saved.

In another embodiment, the tantalum powder is reheated to start the low temperature nitridation of step 3) after the temperature in the deoxidation treatment of step 2) is lowered to room temperature.

The tantalum powder used in step 1) is flaked tantalum powder, for example, obtained by flaking by vibration ball milling or stirring ball milling on the tantalum powder reduced with sodium and by carrying out pickling and impurity removal. Preferably, the heat treatment in step 1) is accomplished under a vacuum condition. Preferably, the heat treatment temperature is 1200°C-1600°C, preferably 1250-1500°C, more preferably 1300-1450°C. In a preferred embodiment, the flaked tantalum powder as a raw material is obtained by the following manner: the tantalum powder reduced with sodium is subjected to ball milling, pickling and impurity removal to obtain the flaked tantalum powder, optionally, the flaked tantalum powder is doped with ammonium dihydrogen phosphate (which can also be ammonium hexafluorophosphate) of 10-100ppm based on the amount of phosphorus element, and/or boric acid of 1-80ppm based on the amount of boron element, and is heated to 1200-1600°C under a vacuum condition for heat treatment.

For step 2) or step 5), the temperature and time of temperature-keeping of the deoxidation are not specifically limited, for example, the temperature can be kept at 800-1000°C (preferably 850-950°C) or 750-980°C or 750-900°C for 3-6 hours (preferably 3-5 hours or 4-6 hours).

Preferably, the deoxidation in step 2) is carried out by doping magnesium powder into the tantalum powder obtained in step 1) in proportion (for example, magnesium powder of 0.5-5wt% based on the weight of the tantalum powder), and heating to the temperature of 700-1000°C in an argon atmosphere. More preferably, the temperature is 800-900°C. For example, deoxidation can be accomplished in the following manner: the product obtained in step 1) is doped in proportion with magnesium powder of 0.5-5wt % based on the weight of the tantalum powder, and is heated to the temperature of 700-1000°C in an argon atmosphere, then the temperature is lowered to 240-500°C (for example, 300-450°C or 400°C) and the inert atmosphere is replaced into nitrogen atmosphere, and the temperature is kept for 80-150 minutes (for example, 120 minutes), after cooling and passivating, the product is discharged out of furnace and is sieved, then is subjected to pickling and impurity removal and drying.

Low-temperature nitridation in step 3) refers to nitriding at the temperature of 500°C or lower. Preferably, low-temperature nitridation is carried out in the following manner: after the temperature in step 2) is lowered to 240-500°C (for example, 300-450°C or about 400°C), the inert atmosphere is replaced into nitrogen atmosphere (preferably keeping the atmosphere in the furnace as positive pressure, for example, 0-0.1MPa, for example, 0-0.01MPa), the temperature is kept for 80-150 minutes (for example, 90-140 minutes or about 120 minutes), after cooling and passivating, the product is discharged out of furnace. Preferably, after passivating and discharging out of furnace, the tantalum powder is subjected to sieving, pickling, impurity removal and drying.

Preferably, the second heat treatment in step 4) comprises heating to 1200-1600°C, and keeping the temperature for 30-180 minutes, preferably 30-120 minutes under a vacuum condition.

The deoxidation in step 5) can be any deoxidation method known in the prior art. In one embodiment, the deoxidation process in step 5) is as same as that in step 2). In another embodiment, the deoxidation process in step 5) is different from that in step 2).

With regard to step 3), the inventors have surprisingly found that if nitrogen doping treatment is carried out at a high temperature of 500°C or higher, the diffusion speed of the nitrogen is increased, the oxidation film is rapidly diffused, and the tantalum powder is exposed, thus the exothermal reaction between nitrogen and the tantalum of the uppermost layer in contacted with nitrogen rapidly progresses, and even the reaction is out-of-control locally, while the powder at the lower layer is in a state that the nitrogen cannot be rapidly supplied. As a result, the nitrogen content of the powder at the surface is very large, and the nitrogen content of the powder in the lower layer is very small, and the nitrogen content difference among the particles becomes very large, and it is possible to generate nitride crystals (such as Ta2 Ney TaN) and the like. The research of the inventors proves that if nitrogen doping treatment is carried out only at 500°C or lower, and then no high-temperature heat treatment of 1000°C or higher is carried out, the nitrogen content only stays on the surface of the tantalum powder, the diffusion does not reach a enough depth, and not be uniform, thus it has not a significant effect to the improvement of the leakage current of the tantalum powder of 30000µFV/g or lower, particularly the medium-high-voltage flaked tantalum powder, or in other words, has not a significant effect to increase the capacity of the tantalum powder. By combing with the characteristics of a conventional medium-high-voltage tantalum powder production process, in the method of the present invention, low-temperature nitrogen doping is carried out in the deoxidation process, and then high-temperature heat treatment is further carried out; thereby the above problems are avoided.

It should be understood that for the doping of a phosphorus element and/or a boron element, one element may be doped, or two elements may be doped at the same time, and it can optionally to add a compound containing phosphorus and/or boron before the heat treatment of step 1), or to add a compound containing phosphorus and/or boron together with magnesium powder during the deoxidation treatment of step 2), and it can also be selected to add a compound containing phosphorus and/or boron after step 5).

### Specific Implementation Mode

A Fisher average particle size (FSSS/µm) for describing tantalum metal particles disclosed in this specification is determined with a Fisher sub-screening instrument. The oxygen and nitrogen contents analysis are analyzed with ON-600 oxygen nitrogen tester of LECO Corporation of United States. The phosphorus content is analyzed with 2800UV/VIS spectrophotometer of Eunic (Shanghai) Instrument Company. The contents of iron and boron and impurity elements are analyzed with DV-5 DC arc optoelectronic spectrometer of Baird Company of United States, Scott bulk density (SBD, g/cm³) is obtained by testing according to a method specified in China National Standard GB5060-85.

For further understanding of the invention, the embodiments of the present invention are described in conjunction with the Examples and the accompanying tables, but it should be understood that the descriptions are only for the specification of the features and advantages of the present invention, but not intend to limit the scope of the claims of the present invention.

The raw materials adopted herein are commercially available, such as commercially available from Ningxia Orient Tantalum Industry Co. Ltd.

### Example 1

The flaked tantalum powder obtained by adopting the prior art was used as a raw material 1. The parameters of the flaked tantalum powder obtained by testing are shown in Table 1. 5Kg of raw material 1 was taken, and boric acid of 40ppm based on the amount of boron elements was added, after uniformly mixing and carrying out agglomeration treatment on the mixture, the mixture was put into a heat treatment furnace, the temperature was kept at 1450°C for 60 minutes followed by cooling and passivating, after that, discharging out of the furnace, sieving by a 60-mesh screen and carrying out magnetic separation. Then, the magnesium powder of 1.5% based on the weight of the tantalum powder was doped, the temperature was raised to 900°C and was kept for 4 hours under the protection of inert gas followed by lowering the temperature and cooling to 450°C, after that, evacuation replacement was carried out, and high-purity nitrogen was filled until the pressure reaching a positive pressure (+0.01MPa), then the temperature was kept for 60 minutes, and cooling and passivating were carried out, after that, discharging out of the furnace, and after carrying out pickling and impurity removal with the prior art process, it was put into a heat treatment furnace again, then the temperature was kept at 1430°C for 60 minutes, and then cooling and passivating, after that, discharging out of the furnace, sieving by a 60-mesh screen and carrying out magnetic separation.

Next, the magnesium powder of 1.5% based on the weight of the tantalum powder was doped, the temperature was raised to 900°C and was kept for 4 hours under the protection of inert gas followed by cooling and passivating, after that, discharging out of the furnace, and carrying out pickling and impurity removal with the prior art process to obtain a finished product. The chemical impurities and the physical properties of the finished product are shown in Table 2.

The powder sample was pressed and formed into a compact that had a density of 5.0g/cm³, and a weight of the core powder of 0.20g. The compact was sintered at 1600°C for 15 minutes to obtain a sintered compact. The sintered compact was energized by 150v in a 0.01% phosphoric acid solution. The capacity and loss of the sintered compact were measured at a test frequency of 5000-30000Hz. The measured electrical properties of the sample are listed in Table 3.

### Comparative Example 1

The raw material was the same as that used in Example 1.5 Kg of raw material was taken, and boric acid of 40ppm based on the amount of boron element was added, after uniformly mixing and carrying out agglomeration treatment on the mixture, the mixture was put into a heat treatment furnace, the temperature was kept at 1450°C for 60 minutes followed by cooling and passivation, after that, discharging out of the furnace, sieving by a 60-mesh screen and carrying out magnetic separation. Then, the magnesium powder of 1.5% based on the weight of the tantalum powder was doped, the temperature was raised to 900°C and was kept for 4 hours under the protection of inert gas followed by lowering the temperature, and cooling and passivating were carried out, after that, discharging out of the furnace, and after carrying out pickling and impurity removal with the prior art process, it was put into a heat treatment furnace again, then the temperature was kept at 1430°C for 60 minutes, and cooling and passivating were carried out, after that, discharging out of the furnace, sieving by a 60-mesh screen and carrying out magnetic separation.

Next, the magnesium powder of 1.3% based on the weight of the tantalum powder was doped, the temperature was raised to 900°C and was kept for 4 hours under the protection of inert gas followed by lowering the temperature and cooling to 450°C, after that, evacuation replacement was carried out, and high-purity nitrogen was filled until the pressure reaching a positive pressure (+0.01MPa), then the temperature was kept for 60 minutes, and cooling and passivating were carried out, after that, discharging out of the furnace, and carrying out pickling and impurity removal with the prior art process to obtain a finished product. The chemical impurities and the physical properties of the finished product are shown in Table 2.

The above powder was subjected to electrical properties detection by using the same condition as Example 1. The measured electrical properties of the sample are listed in Table 3.

### Example 2

The same raw material as Example 1 was used. Its parameters obtained by testing are shown in Table 1. After agglomeration treatment, the raw material was put into a heat treatment furnace, the temperature was kept at 1400°C for 60 minutes followed by cooling and passivating, after that, discharging out of the furnace, sieving by a 60-mesh screen and carrying out magnetic separation, and then ammonium hexafluorophosphate of 70ppm based on the amount of phosphorus element was added, and magnesium powder of 2.0% based on the weight of the tantalum powder was doped with uniformly mixing, the temperature was raised to 880°C and was kept for 4 hours under the protection of the inert gas followed by lowering the temperature and cooling to 350°C, then evacuation replacement was carried out, and high-purity nitrogen was filled until the pressure reaching a positive pressure (+0.01MPa), then the temperature was kept for 60 minutes, and cooling and passivating were carried out, after that, discharging out of the furnace, and after carrying out pickling and impurity removal with the prior art process, it was put into a heat treatment furnace again, then the temperature was kept at 1400°C for 60 minutes, and cooling and passivating were carried out, after that, discharging out of the furnace, sieving by a 60-mesh screen and carrying out magnetic separation.

Next, the magnesium powder of 1.8% based on the weight of the tantalum powder was doped, the temperature was raised to 880°C and was kept for 4 hours under the protection of inert gas followed by cooling and passivating, after that, discharging out of the furnace, and carrying out pickling and impurity removal with the prior art process to obtain a finished product. The chemical impurities and the physical properties of the finished product are shown in Table 2.

The above powder sample was pressed and formed into a compact that had a density of 5.0g/cm³ and a weight of the core powder of 0.20g. The compact was sintered in a vacuum furnace of 10⁻³Pa at 1700°C for 15 minutes to obtain a sintered compact. The sintered compact was energized by 140V in a 0.01% phosphoric acid solution. The capacity and loss of the sintered compact were measured at a test frequency of 5000-30000Hz. The measured electrical properties of the sample are listed in Table 3.

### Comparative Example 2

The same raw material as Example 2 was used. After agglomeration treatment, the raw material was put into a heat treatment furnace, the temperature was kept at 1400°C for 60 minutes followed by cooling and passivating, after that, discharging out of the furnace, sieving by a 60-mesh screen and carrying out magnetic separation, and then magnesium powder of 2.0% based on the weight of the tantalum powder was doped with uniformly mixing, and the temperature was raised to 880°C and was kept for 4 hours under the protection of the inert gas followed by lowering the temperature, cooling and passivating, after that, discharging out of the furnace, and after carrying out pickling and impurity removal with the prior art process, it was put into a heat treatment furnace again, then the temperature was kept at 1400°C for 60 minutes, and cooling and passivating were carried out, after that, discharging out of the furnace, sieving by a 60-mesh screen and carrying out magnetic separation.

Next, the magnesium powder of 1.8% based on the weight of the tantalum powder was doped, and ammonium hexafluorophosphate of 70ppm based on the amount of phosphorus element was added, the temperature was raised to 880°C and was kept for 4 hours under the protection of inert gas followed by lowering the temperature and cooling to 350°C, then evacuation replacement was carried out, and high-purity nitrogen was filled until the pressure reaching a positive pressure, such as +0.01MPa, then the temperature was kept for 60 minutes, and cooling and passivating were carried out, after that, discharging out of the furnace, and carrying out pickling and impurity removal with the prior art process to obtain a finished product. The chemical impurities and the physical properties of the finished product are shown in Table 2.

The above powder was subjected to electrical properties detection by using the same condition as Example 2. The measured electrical properties of the sample are listed in Table 3.

### Example 3

The flaked tantalum powder obtained with the prior art process was used as a raw material 2. Its properties are shown in Table 1.5 Kg of raw material 2 was taken, and ammonium dihydrogen phosphate of 80ppm base on the amount of phosphorus element was added, after uniformly mixing and carrying out agglomeration treatment on the mixture, the mixture was put into a heat treatment furnace, the temperature is kept at 1380°C for 60 minutes followed by cooling and passivating, after that, discharging out of the furnace, sieving by a 60-mesh screen and carrying out magnetic separation. Then, the magnesium powder of 2.5% based on the weight of the tantalum powder was doped, the temperature was raised to 800°C and was kept for 4 hours under the protection of inert gas followed by lowering the temperature and cooling to 320°C, after that, evacuation replacement was carried out, and high-purity nitrogen was filled until the pressure reaching a positive pressure (+0.01MPa), then the temperature was kept for 60 minutes, and cooling and passivating were carried out, after that, discharging out of the furnace, and after carrying out pickling and impurity removal with the prior art process, it was put into a heat treatment furnace again, then the temperature was kept at 1450°C for 60 minutes, and cooling and passivating were carried out, after that, discharging out of the furnace, sieving by a 60-mesh screen and carrying out magnetic separation.

Next, the magnesium powder of 2.0% based on the weight of the tantalum powder was doped, the temperature was raised to 860°C and was kept for 4 hours under the protection of inert gas followed by cooling and passivating, after that, discharging out of the furnace, and carrying out pickling and impurity removal with the prior art process to obtain the finished product. The chemical impurities and the physical properties of the finished product are shown in Table 2.

The above powder sample was pressed and formed into a compact that had a density of 5.0g/cm³ and a weight of the core powder of 0.15g. The compact was sintered at 1500°C for 20 minutes to obtain a sintered compact. The sintered compact was energized by 140V in a 0.01% phosphoric acid solution. The capacity and loss of the sintered compact were measured at a test frequency of 5000-30000Hz. The measured electrical properties of the sample are listed in Table 3.

### Comparative Example 3

The raw material was the same as that used in Example 3.5 Kg of raw material was taken, and ammonium dihydrogen phosphate of 80ppm based on the amount of phosphorus element was added, after uniformly mixing and carrying out agglomeration treatment on the mixture, the mixture was put into a heat treatment furnace, the temperature was kept at 1380°C for 60 minutes followed by cooling and passivating, after that, discharging out of the furnace, sieving by a 60-mesh screen and carrying out magnetic separation. Then, the magnesium powder of 2.5% based on the weight of the tantalum powder was doped, the temperature was raised to 860°C and the temperature was kept for 4 hours under the protection of inert gas followed by lowering the temperature, cooling and passivating, after that, discharging out of the furnace, and after carrying out pickling and impurity removal with the prior art process, it was put into a heat treatment furnace again, then the temperature was kept at 1450°C for 60 minutes, and cooling and passivating were carried out, after that, discharging out of the furnace, sieving by a 60-mesh screen and carrying out magnetic separation.

Next, the magnesium powder of 2.0% based on the weight of the tantalum powder was doped, the temperature was raised to 860°C and was kept for 4 hours under the protection of inert gas followed by lowering the temperature and cooling to 320°C, then evacuation replacement was carried out, and high-purity nitrogen was filled until the pressure reaching a positive pressure, such as +0.01MPa, then the temperature was kept for 60 minutes, and cooling and passivating were carried out, after that, discharging out of the furnace, and carrying out pickling and impurity removal with the prior art process to obtain a finished product. The chemical impurities and the physical properties of the finished product are shown in Table 2.

The above powder was subjected to electrical properties detection by using the same condition as Example 3. The measured electrical properties of the sample are listed in Table 3.

### Example 4

The flaked tantalum powder obtained with the prior art process was used as a raw material 3. Its properties are shown in Table 1.5 Kg of raw material 3 was taken, and boric acid of 40ppm based on the amount of boron elements was added, after uniformly mixing and carrying out agglomeration treatment on the mixture, the mixture was put into a heat treatment furnace, the temperature was kept at 1520°C for 60 minutes followed by cooling and passivating, after that, discharging out of the furnace, sieving by a 60-mesh screen and carrying out magnetic separation. Then, the magnesium powder of 1.5% based on the weight of the tantalum powder was doped, the temperature was raised to 920°C and was kept for 4 hours under the protection of inert gas followed by lowering the temperature and cooling to 420°C, then evacuation replacement was carried out, and high-purity nitrogen was filled until the pressure reaching a positive pressure (+0.01MPa), then the temperature was kept for 60 minutes followed by cooling and passivating, after that, discharging out of the furnace, and after carrying out pickling and impurity removal with the prior art process, it was put into a heat treatment furnace again, then the temperature was kept at 1520°C for 60 minutes, and cooling and passivating were carried out, after that, discharging out of the furnace, sieving by a 60-mesh screen and carrying out magnetic separation to obtain a finished product. The chemical impurities and physical properties of the finished product are shown in Table 2.

The above powder sample was pressed and formed into a compact that had a density of 6.0g/cm³ and a weight of the core powder of 3g. The sintered compact that was obtained by sintering at 1700°C for 30 minutes was energized by 150V in a 0.01% phosphoric acid solution. The capacity and loss of the sintered compact were measured at a test frequency of 5000-30000Hz. The measured electrical properties of the sample are listed in Table 3.

### Comparative Example 4

The raw material was the same as that used in Example 4. 5Kg of raw material was taken, and boric acid of 40ppm based on the amount of boron elements was added, after uniformly mixing and carrying out agglomeration treatment on the mixture, the mixture was put into a heat treatment furnace, the temperature was kept at 1520°C for 60 minutes followed by cooling and passivating, after that, discharging out of the furnace, sieving by a 60-mesh screen and carrying out magnetic separation. Then, the magnesium powder of 1.5% based on the weight of the tantalum powder was doped; the temperature was raised to 920°C and was kept for 4 hours under the protection of inert gas, then the temperature is lowered.

Then, the temperature was raised to 450°C under the protection of inert gas, after that, evacuation replacement was carried out, and high-purity nitrogen was filled until the pressure reaching a positive pressure (+0.01MPa), then the temperature was kept for 60 minutes followed by cooling and passivating, after that, discharging out of the furnace to obtained a finished product. The chemical impurities and the physical properties of the finished product are shown in Table 2.

The above powder was subjected to electrical properties detection by using the same condition as Example 4. The measured electrical properties of the sample are listed in Table 3.

**Table 1: Main impurity contents and physical properties of raw materials used in the present invention**

| | O | N | Fe | Fsss | SBD |
|---|---|---|---|---|---|
| | ppm | ppm | ppm | (µm) | (g/cc) |
| raw material 1 | 6020 | 120 | 20 | 0.65 | 1.00 |
| raw material 2 | 8910 | 110 | 19 | 0.48 | 0.91 |
| raw material 3 | 3520 | 80 | 18 | 0.90 | 1.08 |

**Table 2: Main impurity contents and physical properties of samples of the Examples and Comparative Examples of the present invention**

| | O | N | Fe | B | P | Fsss | SBD |
|---|---|---|---|---|---|---|---|
| | ppm | ppm | ppm | ppm | ppm | (µm) | (g/cc) |
| Example 1 | 2020 | 1400 | 26 | 35 | 20 | 2.65 | 1.72 |
| Comparative Example 1 | 1940 | 1580 | 25 | 32 | 22 | 2.70 | 1.69 |
| Example 2 | 1820 | 780 | 23 | -- | 58 | 2.36 | 1.68 |
| Comparative Example 2 | 1990 | 1040 | 25 | -- | 62 | 2.47 | 1.76 |
| Example 3 | 2490 | 770 | 23 | -- | 72 | 2.85 | 1.78 |
| Comparative Example 3 | 2480 | 870 | 24 | -- | 71 | 2.38 | 1.68 |
| Example 4 | 1530 | 570 | 29 | 28 | 10 | 4.59 | 1.87 |
| Comparative Example 4 | 1770 | 520 | 27 | 24 | 10 | 4.53 | 1.90 |

**Table 3: Main electrical properties of samples of the Examples and Comparative Examples of the present invention under high frequency test**

| Electrical properties test condition | | Leakage current K value µA/µFV | Capacity (CV) µFV/g | Loss (tg δ) % | Breakdown voltage (VB) V | Volume shrinkage (SHV) % |
|---|---|---|---|---|---|---|
| 5000Hz | Example 1 | 2.2×10⁻⁴ | 16407 | 98.8 | 175 | 7.1 |
| | Comparative Example 1 | 3.8×10⁻⁴ | 13947 | 97.3 | 170 | 11.9 |
| 20000Hz | Example 1 | 3.3×10⁻⁴ | 11110 | 200.4 | 175 | 7.1 |
| | Comparative Example 1 | 5.9×10⁻⁴ | 9060 | 191.2 | 170 | 11.9 |
| 8000Hz | Example 2 | 1.5×10⁻⁴ | 12236 | 90.5 | 210 | 14.8 |
| | Comparative Example 2 | 2×10⁻⁴ | 10127 | 88 | 210 | 17.6 |
| 25000Hz | Example 2 | 2.3×10⁻⁴ | 7784 | 174.4 | 210 | 14.8 |
| | Comparative Example 2 | 3.2×10⁻⁴ | 6337 | 157.2 | 214 | 17.6 |
| 5000Hz | Example 3 | 4.0×10⁻⁴ | 21483 | 85.2 | 205 | 16.9 |
| | Comparative Example 3 | 4.5×10⁻⁴ | 17757 | 90.3 | 205 | 20.7 |
| 15000Hz | Example 3 | 5.8×10⁻⁴ | 14054 | 196.0 | 205 | 16.9 |
| | Comparative Example 3 | 6.0×10⁻⁴ | 12972 | 200.9 | 205 | 20.7 |
| 5000Hz | Example 4 | 1.5 ×10⁻⁴ | 8158 | 71.0 | 269 | 14.1 |
| | Comparative Example 4 | 1.8 ×10⁻⁴ | 6154 | 72.4 | 266 | 17.7 |
| 30000Hz | Example 4 | 1.9 ×10⁻⁴ | 4967 | 418 | 269 | 14.1 |
| | Comparative Example 4 | 2.0 ×10⁻⁴ | 4419 | 430 | 266 | 17.7 |

It is known from these values in the tables, the leakage current of the samples in the Examples is significantly reduced compared with those in the Comparative Examples. For example, the leakage current is reduced by at least 10%, and the capacity is significantly increased, for example, 5% or more. This has a great advantage for the tantalum powder with high-frequency characteristics, and is also unexpected.

It can be known from the data of Tables 2 and 3 that the tantalum powders obtained by the Examples have a small density ratio before and after sintering, the excess shrinkage caused by sintering is inhibited, so that the capacity is high under the high-frequency test condition, and the leakage current is relatively small; while for the tantalum powder obtained by the Comparative Examples, since they are not subjected to high-temperature treatment after nitrogen doping, the shrinkage caused by sintering is large, so that the capacity is relatively low under the high-frequency test condition, and the leakage current is relatively large.

## Claims

1. A method for preparing flaked tantalum powder comprising the following steps:
1) subjecting the flaked tantalum powder to first heat treatment;
2) subjecting the first heat treated tantalum powder to first deoxidation;
3) subjecting the first deoxidized tantalum powder to low temperature nitridation at a temperature of 500°C or lower;
4) subjecting the low-temperature nitrided tantalum powder to second heat treatment at a temperature of 1000°C or higher; and
5) subjecting the second heat-treated tantalum powder to second deoxidation, and then optionally to pickling, water washing, drying, and sieving to obtain finished flaked tantalum powder,
wherein the flaked tantalum powder of step 1) is obtained by subjecting tantalum powder obtained by reduction of potassium fluotantalate with sodium to ball milling, and pickling and impurity removal.

2. The method according to claim 1, wherein the ball milling is vibration ball milling or agitating ball milling.

3. The method according to claim 1 or 2, wherein the first deoxidation of step 2) comprises keeping the temperature at 800 to 1000°C, preferably 850 to 950°C; or 750 to 980°C or 750 to 900°C for 3-6 hours, preferably 3-5 hours or 4-6 hours.

4. The method according to claim 1 or 2 or 3, wherein the low temperature nitridation of step 3) is started in temperature lowering process of the first deoxidation treatment of step 2), particularly when temperature is lowered to 500°C or lower, for example, a temperature between 500 and 240°C, or the low temperature nitridation of step 3) is started by reheating after the temperature in the deoxidation treatment of step 2) is lowered to room temperature.

5. A flaked tantalum powder prepared by the method according to any one of claims 1 to 4 preferably suitable for use in a high frequency capacitor, wherein the flaked tantalum powder comprises nitrogen of 300 to 1800ppm, preferably nitrogen of 400 to 1600ppm, more preferably 500 to 1500ppm, most preferably 700 to 1300ppm; and phosphorus of 10 to 100ppm; and boron of 1 to 80ppm.

6. The flaked tantalum powder according to claim 5, it is **characterized in that** the anode of the electrolytic capacitor made of the powder has a capacity of about 3000 to 30000µFV/g under the condition of an energization voltage of 100-250V and a test frequency of 5000-30000 Hz.

7. The flaked tantalum powder according to claim 5 or 6, it is **characterized in that** the tantalum powder contains boron of 10-65ppm, preferably 20-50ppm.

8. The flaked tantalum powder according to any one of claims 5 to 7, wherein the tantalum powder has oxygen content of 800 to 3000ppm.

9. The flaked tantalum powder according to any one of claims 5 to 8, wherein the Scott bulk density of the power is 1.4 to 2.0 g/cm³, preferably 1.55 to 1.9 g/cm³.

## Patentansprüche

1. Verfahren zur Herstellung von plättchenförmigem Tantalpulver, das die folgenden Schritte beinhaltet:
1) Unterziehen des plättchenförmigen Tantalpulvers einer ersten Wärmebehandlung;
2) Unterziehen des ersten wärmebehandelten Tantalpulvers einer ersten Desoxidation;
3) Unterziehen des ersten reduzierten Tantalpulvers Niedertemperaturnitrierung bei einer Temperatur von 500 °C oder darunter;
4) Unterziehen des niedertemperaturnitrierten Tantalpulvers einer zweiten Wärmebehandlung bei einer Temperatur von 1000 °C oder darüber; und
5) Unterziehen des zweiten wärmebehandelten Titanpulvers einer zweiten Desoxidation und dann wahlweise Beizen, Waschen mit Wasser, Trocknen und Sieben zum Erhalten von fertigem plättchenförmigem Tantalpulver,
wobei das plättchenförmige Tantalpulver von Schritt 1) durch Unterziehen von Tantalpulver, das durch Reduktion von Kaliumfluotantalat mit Natrium erhalten wurde, Kugelmahlen, Beizen und Entfernen von Verunreinigungen erhalten wird.

2. Verfahren nach Anspruch 1, wobei das Kugelmahlen ein Vibrationskugelmahlen oder ein Mahlen mit Rührwerkskugelmühle ist.

3. Verfahren nach Anspruch 1 oder 2, wobei die erste Desoxidation von Schritt 2) das Halten der Temperatur auf 800 bis 1000 °C, vorzugsweise 850 bis 950 °C; oder 750 bis 980 °C oder 750 bis 900 °C für 3 bis 6 Stunden, vorzugsweise 3 bis 5 Stunden oder 4 bis 6 Stunden beinhaltet.

4. Verfahren nach Anspruch 1 oder 2 oder 3, wobei die Niedertemperaturnitrierung von Schritt 3) in einem Temperatursenkungsprozess der ersten Desoxidationsbehandlung von Schritt 2) begonnen wird, insbesondere, wenn die Temperatur auf 500 °C oder darunter gesenkt wird, zum Beispiel eine Temperatur zwischen 500 und 240°C, oder die Niedertemperaturnitrierung von Schritt 3) durch Wiedererwärmen nach dem Senken der Temperatur in der Desoxidationsbehandlung von Schritt 2) auf Raumtemperatur begonnen wird.

5. Plättchenförmiges Tantalpulver, hergestellt mit dem Verfahren nach einem der Ansprüche 1 bis 4, vorzugsweise zur Verwendung in einem Hochfrequenzkondensator geeignet, wobei das plättchenförmige Tantalpulver Stickstoff von 300 bis 1800 ppm, bevorzugt Stickstoff von 400 bis 1600 ppm, mehr bevorzugt 500 bis 1500 ppm, am meisten bevorzugt 700 bis 1300 ppm; und Phosphor von 10 bis 100 ppm; und Bor von 1 bis 80 ppm beinhaltet.

6. Plättchenförmiges Tantalpulver nach Anspruch 5, **dadurch gekennzeichnet, dass** die Anode des aus dem Pulver hergestellten Elektrolytkondensators eine Kapazität von etwa 3000 bis 30000 µFV/g unter der Bedingung einer Erregerspannung von 100 - 250 V und einer Testfrequenz von 5000 - 30000 Hz aufweist.

7. Plättchenförmiges Tantalpulver nach Anspruch 5 oder 6, **dadurch gekennzeichnet, dass** das Tantalpulver Bor von 10 bis 65 ppm, vorzugsweise 20 bis 50 ppm, beinhaltet.

8. Plättchenförmiges Tantalpulver nach einem der Ansprüche 5 bis 7, wobei das Tantalpulver einen Sauerstoffgehalt von 800 bis 3000 ppm aufweist.

9. Plättchenförmiges Tantalpulver nach einem der Ansprüche 5 bis 8, wobei die Scott-Schüttdichte des Pulvers 1,4 bis 2,0 g/cm³, vorzugsweise 1,55 bis 1,9 g/cm³ ist.

## Revendications

1. Procédé de préparation de poudre de tantale floconneuse comprenant les étapes suivantes :
1) soumettre la poudre de tantale floconneuse à un premier traitement thermique ;
2) soumettre la poudre de tantale soumise à un premier traitement thermique à une première désoxydation ;
3) soumettre la poudre de tantale soumise à une première désoxydation à une nitruration à basse température à une température de 500 °C ou plus basse ;
4) soumettre la poudre de tantale nitrurée à basse température à un deuxième traitement thermique à une température de 1000 °C ou plus élevée ; et
5) soumettre la poudre de tantale soumise à un deuxième traitement thermique à une deuxième désoxydation, et puis optionnellement à un décapage, lavage à l'eau, séchage et tamisage afin d'obtenir une poudre de tantale floconneuse finie,
dans lequel la poudre de tantale floconneuse de l'étape 1) est obtenue en soumettant la poudre de tantale obtenue par réduction de fluotantalate de potassium avec du sodium à un broyage à boulets, et décapage et élimination d'impuretés.

2. Procédé selon la revendication 1, dans lequel le broyage à boulets est un broyage à boulets vibrant ou un broyage à boulets agité.

3. Procédé selon la revendication 1 ou 2, dans lequel la première désoxydation de l'étape 2) comprend garder la température à de 800 à 1000 °C, de préférence de 850 à 950 °C ; ou de 750 à 980 °C ou de 750 à 900 °C pendant 3-6 heures, de préférence 3-5 heures ou 4-6 heures.

4. Procédé selon la revendication 1, 2 ou 3, dans lequel la nitruration à basse température de l'étape 3) est commencée dans un processus d'abaissement de température du premier traitement de désoxydation de l'étape 2), particulièrement lorsque la température est abaissée à 500 °C ou plus basse, par exemple, une température d'entre 500 et 240 °C,
ou la nitruration à basse température de l'étape 3) est commencée par réchauffement après que la température dans le traitement de désoxydation de l'étape 2) a été abaissée à la température ambiante.

5. Poudre de tantale floconneuse préparée par le procédé selon l'une quelconque des revendications 1 à 4, convenant de préférence pour utilisation dans un condensateur haute fréquence, où la poudre de tantale floconneuse comprend de l'azote de 300 à 1800 ppm, de préférence de l'azote de 400 à 1600 ppm, plus préférentiellement de 500 à 1500 ppm, le plus préférentiellement de 700 à 1300 ppm ; et du phosphore de 10 à 100 ppm ; et du bore de 1 à 80 ppm.

6. Poudre de tantale floconneuse selon la revendication 5, elle est **caractérisée en ce que** l'anode du condensateur électrolytique fait de la poudre, a une capacité d'environ 3000 à 30000µFV/g dans la condition d'une tension d'excitation de 100-250 V et d'une fréquence de test de 5000-30000 Hz.

7. Poudre de tantale floconneuse selon la revendication 5 ou 6, elle est **caractérisée en ce que** la poudre de tantale contient du bore de 10-65 ppm, de préférence de 20-50 ppm.

8. Poudre de tantale floconneuse selon l'une quelconque des revendications 5 à 7, où la poudre de tantale a une teneur en oxygène de 800 à 3000 ppm.

9. Poudre de tantale floconneuse selon l'une quelconque des revendications 5 à 8, dans laquelle la masse volumique apparente de Scott de la poudre est de 1,4 à 2,0 g/cm³, de préférence de 1,55 à 1,9 g/cm³.
